# EUROPEAN PATENT SPECIFICATION

(11) **EP 4 145 977 B1**
(45) Date of publication and mention of the grant of the patent: **07.10.2026**
(21) Application number: 20947744.7
(22) Date of filing: 31.07.2020
(51) Int. Cl.: A01D 34/00, G05D 1/247, G05D 1/661

(54) **NAVIGATING A ROBOTIC MOWER ALONG A GUIDE WIRE**
NAVIGATION EINES ROBOTISCHEN MÄHERS ENTLANG EINES FÜHRUNGSDRAHTES
GUIDAGE D'UNE TONDEUSE ROBOT LE LONG D'UN FIL-GUIDE

(43) Date of publication of application: 15.03.2023
(73) Proprietor: Globe (Jiangsu) Co., Ltd., Zhonglou District Changzhou, Jiangsu 213023 (CN)
(72) Inventor: LUNDKVIST, Andre, 56636 Habo (SE)
(74) Representative: Bergenstråhle & Partners AB
(86) International application number: PCT/CN2020/106138
(87) International publication number: WO 2022/021299

(56) References cited:
- EP-A1- 2 684 438
- EP-A1- 3 073 602
- WO-A1-2018/182478
- WO-A1-2018/199825
- CN-A- 103 542 800
- CN-A- 105 009 014
- CN-A- 106 576 570
- CN-A- 107 608 341
- US-A1- 2018 199 506

## Description

### Technical field

The present invention generally relates to a method for navigating a robotic mower along a signal wire, e.g., back to a charging station when a battery of the robotic mower needs to be recharged.

### Background art

Robotic mowers, also called self-propelled lawnmowers, are generally known. These robotic mowers are provided with a rechargeable battery. When the remaining power in the battery is below a certain level the robotic mower is programmed to return to the charging station to recharge the battery. There are different possibilities for returning the robotic mower to the charging station. One possible method is that the robotic mower, upon a command to return to the charging station, continues its movement until a boundary wire is detected nearby and then follows the boundary wire to the charging station that is provided somewhere along the boundary wire.

Another option when returning to the charging station is to use a guide wire, which the robotic mower follows back to the charging station. The use of a guide wire often enables a shorter and faster way back to the charging station compared to following the boundary wire. The guide wire can also be beneficial to use when the robotic mower needs to navigate through a narrow passage.

A common approach is to use a signal level of a signal source, such as the guide wire, boundary wire or a signal emitted at the position of the charging station. However, the signal level usually depends on the length of the corresponding wire, and this may be different in different sites, such as smaller or larger gardens. Further, the signal level can be different depending on whether a user decides to route the wire on the surface of the ground or bury it under the surface, and on weather conditions. This may increase the time the robotic mower needs in order to find the charging station. As a result, the mower usually needs to reserve a substantial portion of the battery capacity for the search and navigation towards the charging station.

WO 2018/182478 discloses a robotic working tool comprising a sensor for detecting magnetic fields connected to a controller for controlling the operation of the robotic working tool. As the robotic lawnmower (or more accurately, the sensor) crosses a boundary wire the direction of the magnetic field will change. The robotic lawnmower will thus be able to determine that the boundary wire has been crossed.

EP3073602 discloses an autonomously navigating utility vehicle controlled by an ECU and equipped with a prime mover powered by the battery to travel about a working area delineated by a boundary wire. Magnetic sensors are provided for detecting magnetic field strength H generated by passing electric current through the boundary wire.

EP2684438 discloses a robotic mower including a sensor assembly for detecting a signal in a boundary wire, delimiting a working area. A magnetic field strength component is positive inside the specified area and negative outside the specified area. A reversal of the sign of the magnetic field strength component can be used as a digital input indicating that the boundary wire has been crossed by the sensor assembly.

### Summary

An object of the present invention is to provide a reliable and efficient solution for navigating a robotic mower by means of a wire.

According to an aspect of the present invention this object is achieved by a method as defined in claim 1.

According to an exemplary embodiment there is provided a method for navigating a robotic mower by means of a wire, e.g., for returning the robotic mower to a charging station when the robotic mower needs to be recharged. Therein, the robotic mower comprises at least two sensors. The method comprises detecting, by means of the at least one sensor, at least one signal from the wire. The method further comprises detecting, by means of the at least two sensors, at least one signal from the wire, measuring a polarity of the at least one signal of the wire by means of each one of the at least two sensors, determining a direction based on the polarities measured by means of each of the at least two sensors and turning the robotic mower towards the determined direction. Before measuring the polarity of the at least one signal of the wire by means of each one of the at least two sensors, the robotic mower is driven further across the wire by a predetermined crossing distance.

This is based on the idea to use a polarity of a signal of the wire instead of the strength of the signal. The wire forms a part of an electric circuit. A current through the wire creates a magnetic field around the wire. The sensors are adapted to measure this magnetic field. For example, the sensors are magnetic field sensors. Accordingly, on one side of the wire, the sensors detect an opposite polarity (e.g., upwards or downwards) compared to the other side of the wire (e.g., downwards or upwards, respectively). By measuring the polarity and knowing the direction of the current flow, the mower can thus reliably detect on which side of the wire the measuring sensor is located. The at least two sensors are spaced apart from one another. When the two sensors measure the same polarities, they are both on the same side of the wire. There are four different possibilities (++, --, +- and -+) of combinations of polarities. The charging station is located on a known section of the wire, so the mower may immediately deduce from the two measured polarities whether it is located on the wire in the direction of the charging station or not. The guide wire leads to the charging station, and a predetermined combination of polarities measured by the at least two sensors (e.g., +-) indicates the correct direction. Crossing the wire before measuring the polarity facilitates an alignment with the wire.

In an exemplary embodiment, turning the robotic mower towards the determined direction comprises rotating the robotic mower with respect to the wire such that one of the at least two sensors is located above (in particular, straight above) the wire. This allows to very efficiently and reliably follow the wire.

In an exemplary embodiment, turning the robotic mower towards the determined direction comprises rotating the robotic mower with respect to the wire until one of the at least two sensors detect a change of the polarity of the at least one signal of the wire. Directly above the wire, the corresponding sensor, depending on the type of sensor, may detect a laterally pointing magnetic field, or it may detect that the polarity flips with very small movements of the robotic mower.

In another exemplary embodiment, turning the robotic mower towards the determined direction comprises rotating the robotic mower with respect to the wire until the at least two sensors detect the at least one signal of the wire with opposite polarity. In this manner the robotic mover may deduce that it is oriented substantially parallel to the wire when the wire a routed straight under the mower.

In an embodiment, the wire is a guide wire arranged within an area delimited by a boundary wire. For example, the guide wire is electrically connected to a contact at the charging station with one end of the guide wire. Another end of the guide wire may be electrically connected to the boundary wire. Hence, the robotic mower may be aligned with the guide wire in a particularly efficient, quick and robust manner.

According to an alternative embodiment, the wire is a wire loop, e.g., arranged at (e.g., under) a charging station plate of a charging station. In this way, the robotic mower may determine particularly easily and robust whether it is oriented towards charging connectors of the charging station.

In one embodiment, the method further comprises navigating the robotic mower, by means of one of the at least two sensors detecting at least one signal of the wire, such that one of the at least two sensors is located above the wire and controlling the robotic mower to straddle along the wire towards the predetermined position using a polarity of at least one signal of the wire measured by means of one of the at least two sensors.

This is based on the idea to use the polarity of a signal of the wire instead of the strength of the signal to efficiently, quickly and robustly guide the robotic mower along the wire towards the predetermined position, e.g. the position of a charging station.

Optionally, the step of navigating the robotic mower by means of one of the at least two sensors is performed in accordance with the method for navigating a robotic mower described above. This is a particularly efficient combination, because after determining the right direction, the mower can directly straddle along the wire in one smooth and quick process without the need of time-consuming signal level searches.

According to an embodiment, the method further comprises detecting, by means of one of the at least two sensors, that the robotic mower has entered a wire loop by measuring a polarity of at least one signal of the wire loop, and detecting a change of the polarity of the at least one signal of the wire loop. In this manner the robotic mower can reliably detect that it is arranged inside or outside the wire loop, e.g., in order to determine its current position.

Optionally, the method further comprises, in response to detecting that the robotic mower has entered the wire loop, controlling the robotic mower to drive straight forward for a predetermined distance, e.g., 10 cm, 50 cm, or a value in between. The robotic mower does not need to receive any signal for this movement

According to an embodiment, the wire loop is a first wire loop and a second wire loop is provided (e.g., arranged at least partially inside the first wire loop), and the method further comprises, in response to detecting that the robotic mower has entered the first wire loop, detecting, by means of one of the at least two sensors, that the robotic mower has entered the second wire loop by measuring a polarity of at least one signal of the second wire loop.

According to an embodiment, the method further comprises, in response to detecting that the robotic mower has entered the second wire loop, turning the robotic mower such that the at least two sensors are both located inside or both located outside of the second wire loop, and, in response to assuming this arrangement, controlling the robotic mower to drive straight forward, e.g., until at least one of the sensors detects a change of the measured polarity of the signal of the second wire loop, or until charging connectors of the robotic mower make electric contact with charging connectors of the charging station.

According to an embodiment, the second wire loop is a portion of, or electrically connected with, a boundary wire delimiting an area. The second wire loop may be arranged at, e.g., attached to, a plate of the charging station.

Optionally, the wire is a guide wire arranged within the area delimited by the boundary wire.

According to another aspect the above object is achieved by a robotic mower comprising at least two sensors, and adapted to: detect, by means of the at least two sensors, at least one signal from a wire, measure a polarity of the at least one signal of the wire by means of each one of the at least two sensors, determine a direction based on the polarities measured by means of the at least two sensors and turn towards the determined direction.

Optionally, the robotic mower according to any aspect is further adapted to perform the method according to any aspect or embodiment described herein.

By this, a method and robotic mower for navigating the robotic mower by means of a wire are provided that allow to reliably and efficiently navigate the robotic mower by means of a wire.

### Brief description of drawings

The invention is now described, by way of example, with reference to the accompanying drawings, in which:
Fig. 1 is a schematic view of a robotic mower system.
Fig. 2 is a schematic view of an exemplary embodiment of the robotic mower.
Fig. 3 is a schematic view of an exemplary embodiment of a charging station of the robotic mower system.
Fig. 4 is a schematic block diagram of a control unit in the robotic mower.
Fig. 5 is a schematic block diagram of a signal generator.
Fig. 6A to Fig. 6J show different steps when the robotic mower navigates along a guide wire of the robotic mower system.
Fig. 7 is a flow chart of an exemplary method for navigating the robotic mower by means of the guide wire.

### Description of embodiments

In the following, a detailed description of exemplary embodiments for navigating a robotic mower by means of a wire according to the present disclosure will be presented.

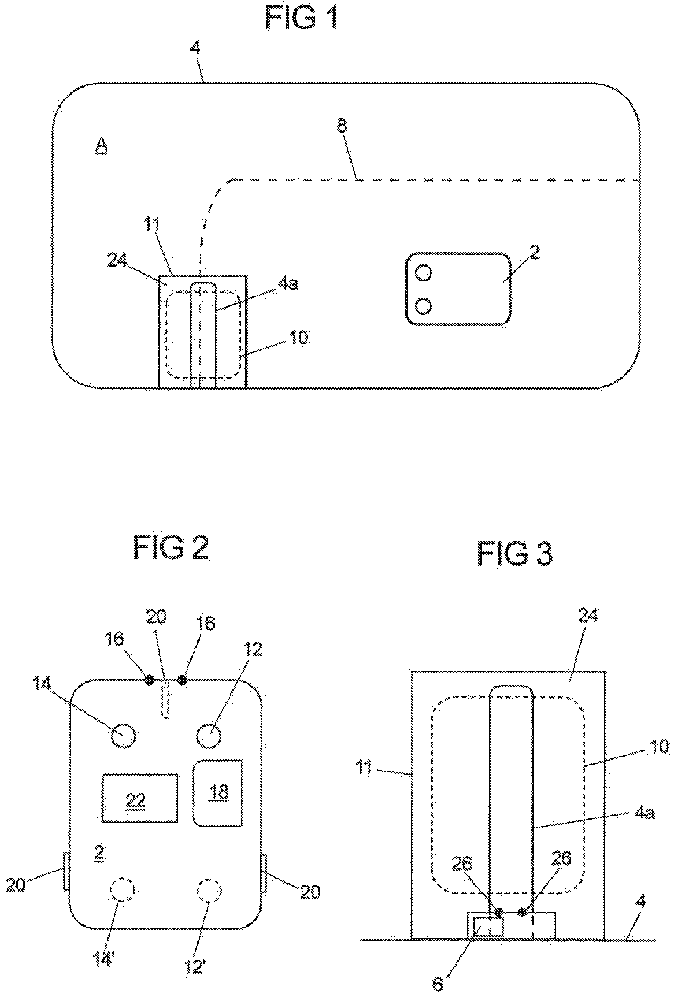

Fig. 1 shows a schematic overview of a system for performing the method of embodiments for navigating a robotic mower 2 by means of a guide wire 8, in particular towards a predetermined position, such as a charging station 11. The robotic mower 2, or as it also may be called a self-propelling lawnmower, is battery powered and needs to be recharged at regular intervals. The robotic mower 2 is during operation configured to move across an area A surrounded by a boundary wire 4. As is obvious the robotic mower 2 is depicted somewhat enlarged for the sake of clarity. The boundary wire 4 may be configured in many different ways, such that it delimits the area A within which the robotic mower 2 is allowed to move. The boundary wire 4 is preferably provided under the ground in the lawn, such that is not visible, but may also be provided on or above the ground. The boundary wire 4 could be an ordinary copper wire of single-core type. There are of course also other options, which are well-known by a person skilled in the art, such as multi stranded wire types. As may be seen in Fig.1 the boundary wire 4 makes a loop 4a in the charging station 11. This loop 4a will be used to guide the robotic mower 2 into charging contact with the charging station 11, which will be described further below.

The system also comprises the charging station 11 mentioned above. The charging station itself 11 may be seen as the place where the charging of the robotic mower 2 takes place, and could for an example be provided with a charging station plate 24 onto which the robotic mower 2 is guided when performing docketing. A charging station plate 24 will make the docketing process more precise, since the robotic mower 2 will be at an even and predictable ground during the docketing process. In order to identify where the charging station 11 is located, there is provided a charging station loop 10 at the charging station 11. As shown in Fig. 1 the boundary wire loop 4a is narrower than and (optionally) crosses the charging station loop 10.

A system according to the present disclosure also comprises one or more guide wires 8. A guide wire 8 is a wire that the robotic mower 2 may follow when returning to the charging station 11 and/or to move along a way that is otherwise difficult to find. The robotic mower may also be adapted to follow the boundary wire 4 back to the charging station 11. However, depending on the location along the boundary wire 4 at which the robotic mower 2 starts to follow the boundary wire 4, the distance along the boundary wire 4 to the charging station 11 may be relatively long. By using a guide wire 8 it is possible to return the robotic mower 2 to the charging station 11 in a faster and less energy consuming way.

The boundary wire 4, the charging station loop 10 and the one or more guide wires 8 are all connected to a signal generator which feeds each wire and loop with a (particularly wire-specific) current signal, in particular an Alternating Current, AC, signal, such that the robotic mower 2 may recognize which wire or loop it is detecting when it is within sensing distance. In general, the robotic mower 2 may be adapted to detect magnetic fields of the different signal wires.

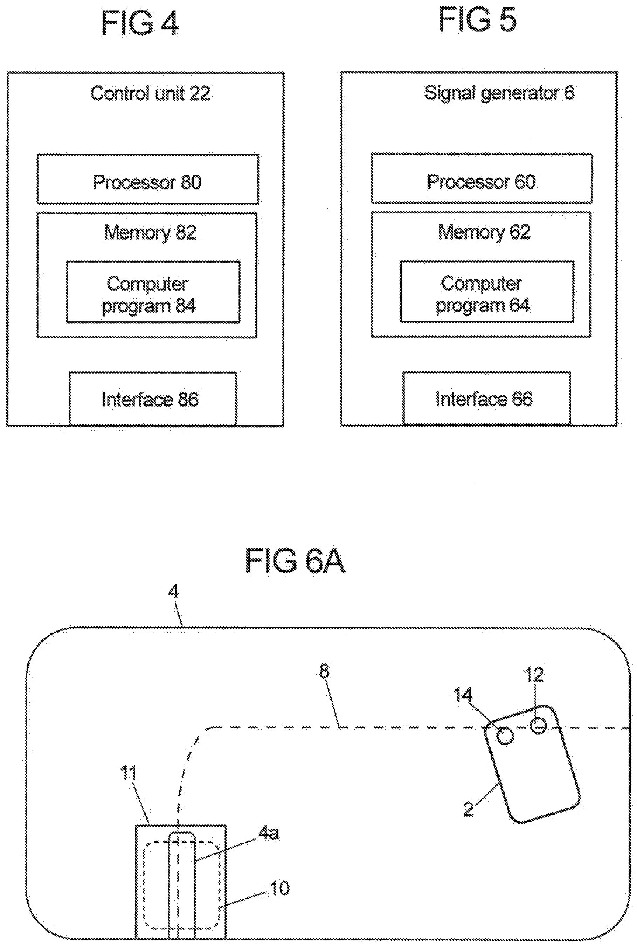

Turning now to Fig. 2, an exemplary embodiment of the robotic mower 2 will be closer described. The robotic mower 2 comprises a control unit 22, wheels 20, at least one sensor 12, 14, in particular two sensors 12, 14, optionally three or four sensors 12, 14, 12', 14', e.g., two sensors 12, 14 at the front and one or two sensors 12', 14' at the back, and a battery 18. The sensors 12, 14, 12', 14' (in the following referred to as sensors 12, 14 for brevity) each are adapted to sense magnetic fields. The control unit 22, which will be closer described in conjunction with Fig. 4, comprises among other things a processor 80 for controlling the movement of the robotic mower 2. When the robotic mower 2 is in operation the sensors 12, 14 can sense a magnetic field that is generated in the boundary wire 4, the charging station loop 10 and the one or several guide wires 8. The signals of the different wires 4, 8 may be encoded differently. The sensed magnetic field (signal) is decoded in the control unit 22 to determine from which loop or wire it was received. The robotic mower 2 further comprises charging connectors 16. In the present example, the robotic mower 2 comprises exactly two sensors 12, 14 but, as said, in alternative embodiments the robotic mower 2 may comprise more than two, e.g., three or four sensors.

It is worth noting that the robotic mower 2 has a forward-rearward axis along which the robotic mower 2 moves when it drives straight ahead or straight backwards. In the present example, the robotic mower 2 has a longitudinal extension in accordance with the forward-rearward axis. The two sensors 12, 14 are arranged displaced to one another in a direction orthogonal to the forward-rearward axis. In this example, the sensors 12, 14 are arranged in a front region of the robotic mower 2 and could be referred to as front sensors 12, 14 (two rear sensors 12', 14' are optionally provided at the rear of the robotic mower 2 and arranged displaced to one another in a direction orthogonal to the forward-rearward axis).

Fig. 3 shows an exemplary embodiment of the charging station 11. The charging station 11 comprises the charging station plate 24 at which the charging station loop 10 (which can also be referred to as far-field loop) and the boundary wire loop 4a (which may also be referred to as near-field loop) are arranged. The charging station 11 further comprises the signal generator 6. As shown in Fig. 3, the charging station 11 comprises charging connectors 26 which are arranged so as to be contacted by the charging connectors 16 of the robotic mower 2 when docking into the charging station 11.

With reference to Fig. 4, the control unit 22 of the robotic mower 2 will be closer described. The control unit 22 comprises, as mentioned above, the processor 80 and a memory 82. The memory 82 may comprise a computer program 84 comprising computer program code, i.e. instructions. The computer program code is adapted to implement method steps performed by the robotic mower 2 when the code is executed on the processor 80. The control unit 22 further comprises an interface 86 for communication with the sensors 12, 14, and one or more motors that operate(s) the robotic mower 2.

The processor 80 may comprise a single Central Processing Unit (CPU), or could comprise two or more processing units. For example, the processor 80 may include general purpose microprocessors, instruction set processors and/or related chips sets and/or special purpose microprocessors such as Application Specific Integrated Circuits (ASICs), Field Programmable Gate Arrays (FPGAs) or Complex Programmable Logic Devices (CPLDs). The processor 80 may also comprise a storage for caching purposes.

Fig. 5 depicts the signal generator 6, which also comprises a processor 60 and a memory 62. The memory 62 may comprise a computer program 64 comprising computer program code, i.e. instructions. The computer program code is adapted to implement method steps performed by the signal generator 6 when the code is executed on the processor 60. The signal generator 6 further comprises an interface 66 for transmitting the generated (e.g., AC) signals to the boundary wire 4, charging station loop 10 and guide wire or wires 8.

As for processor 80 also the processor 60 may comprise a single Central Processing Unit (CPU), or could comprise two or more processing units. For example, the processor 60 may include general purpose microprocessors, instruction set processors and/or related chips sets and/or special purpose microprocessors such as Application Specific Integrated Circuits (ASICs), Field Programmable Gate Arrays (FPGAs) or Complex Programmable Logic Devices (CPLDs). The processor 60 may also comprise a storage for caching purposes.

Turning now to Fig. 6A to Fig. 6J an exemplary embodiment will be closer described.

Firstly, a command is triggered, indicating that the robotic mower 2 shall navigate towards a predetermined position, in the present example the charging station 11. The command may be triggered by the signal generator 6, or by the control unit 22. The robotic mower 2 then starts to search for the guide wire 8. For finding the guide wire 8, the robotic mower 2 drives across the area A and the sensors 12, 14 are used to listen for guide wire 8 signals. The guide wire 8 signals have a range, e.g. of several meters, within which the sensors 12, 14 can sense the signals. As soon as one or both of the sensors 12, 14 receive the guide wire 8 signals, the robotic mower 2 is commanded to drive to the guide wire 8, e.g., simply by continuing to drive straight until the robotic mower 2 crosses the guide wire 8.

To create the guide wire 8 signals, the signal generator 6 directs current through the guide wire 8 which creates a magnetic field around the guide wire 8 having a polarity. Thus, on one side of the guide wire 8, the polarity of the guide wire 8 signal is opposite to the polarity at the other side of the guide wire 8. As soon as the robotic mower 2 crosses the guide wire 8, one or both of the sensors 12, 14 detect a change of the polarity. By detecting this change, the robotic mower 2, more precisely, its control unit 22, is configured to determine that it crosses the guide wire 8.

Fig. 6A shows a situation where the robotic mower 2 detects the guide wire 8. A first sensor 12 of the sensors 12, 14 has crossed the guide wire 8 while the other has not, so the robotic mower 2 can deduce that it is located directly above the guide wire 8.

In the present example, the robotic mower 2 arrived at the guide wire 8 at an angle, and in the situation shown in Fig. 6A, the first sensor 12 has crossed the guide wire 8 while the other, second sensor 14 of the sensors 12, 14 has not yet crossed it. By measuring the guide wire 8 signal polarity with the sensors 12, 14, the robotic mower 2 determines that it is directly above the guide wire 8. When the robotic mower 2 would arrive at the guide wide 8 orthogonally thereto, both sensors 12, 14 would detect a switch of the polarity at the same time, so the robotic mower 2 could deduce that it is directly above the guide wire 8 in that situation.

Further, the guide wire 8 is electrically connected to the signal generator 6 with one end, and to the boundary wire 4 with another end, wherein the boundary wire is connected to the signal generator 6. By determining the polarity of the guide wire 8 signals, the robotic mower 2 is able to deduce on which side of the guide wire 8 the corresponding sensor 12, 14 is located. Further, depending on whether both sensors are left or right of the guide wire 8, or one is left and the other is right (or vice versa) the robotic mower 2 can deduce whether it is oriented along the guide wire 8 towards the charging station 11 or away from the charging station 11, or facing left or right with respect to the guide wire 8. Thus, by a simple and very robust measurement of two polarity signals, the robotic mower 2 can quickly and reliably determine its current orientation with respect to the guide wire 8 and the charging station 11.

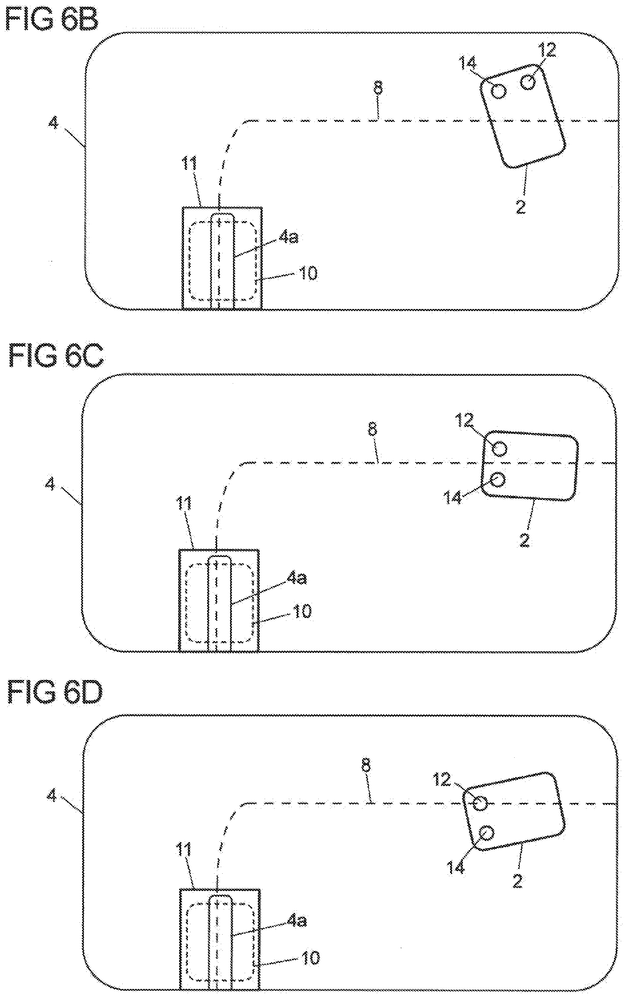

As shown in Fig. 6B, in response to detecting that it is located above the guide wire 8, the robotic mower 2 is adapted to drive further (in particular, straight ahead) across the guide wire 8 for a predefined distance. The predefined distance may be the length of the mower or a fraction thereof, or the turning radius of the robotic mower 2 or a fraction thereof. After driving the predefined distance, both sensors 12, 14 are arranged at the same side of the guide wire 8. Based on the guide wire 8 signal polarity, the robotic mower 2 determines the direction (along the guide wire 8) to the charging station 11. Next, the robotic mower 2 turns left or right towards this determined direction of the charging station 11. While rotating relative to the guide wire 8, the robotic mower 2 analyzes the guide wire 8 signal polarity. As soon as one of the sensors 12, 14, in the figures, the left, second sensor 14, detects a change of the polarity, the robotic mower 2 determines that the guide wire 8 is substantially aligned with the robotic mower 2, in the present example, aligned with the forward-rearward axis of the robotic mower 2.

In other words, the robotic mower 2 may use two front sensors 12, 14 to determine in which direction to follow the guide wire 8 in order to reach the charging station 11. Depending on the polarity of the signal from the guide wire 8, the robotic mower 2 can distinguish if the charging station 11 is located behind, to the left, to the right or in front of the robotic mower 2. The alignment towards the charging station 11 can be used as a trigger point for when to start following the guide wire 8. Further, different actions can be taken by the robotic mower 2 to optimize the alignment process using this information, such as turning different angles and/or turning with different speeds (e.g., turning with a speed and/or by an angle depending on the determined direction). Further, a fault detection after crossing the guide wire 8 may be provided. For example, if the alignment is undefined, the robotic mower 2 can abort the alignment procedure and restart a new search for the guide wire 8 immediately, instead of trying for some time to figure out a solution or trying to locate the guide wire 8. For comparison, a conventional robotic mower would have to turn large angles until a front sensor crosses the wire again to determine its relative position to the wire. The reason for the large angles is because of an inherent risk of slipping on the grass, and therefore the mower may continue to turn until finally giving up. The methods described herein allow to perform calculated actions, thus reducing unnecessary search time and therefore improving battery life.

Fig. 6C shows the robotic mower 2 after aligning with the guide wire 8. The robotic mower 2 now faces the direction along the guide wire 8 towards the charging station 11.

Next, as shown in Fig. 6D, the robotic mower 2 navigates, by means of the sensors 12, 14 detecting signal of the guide wire 8, such that one sensor (here, the first, right-hand side sensor 12) is located directly above the guide wire 8.

Then, the robotic mower 2 starts to straddle the guide wire 8 with one of the sensors 12, 14 directly above the guide wire 8 towards the charging station 11. In the present example, this is the right-hand side sensor 12. The other sensor 14 (here, as an example, the left-hand side sensor) is the one outside the guide loop, witch in the figures is below the guide wire 8. While straddling along the guide wire 8, the robotic mower 2 maintains the same distance to the guide wire 8.

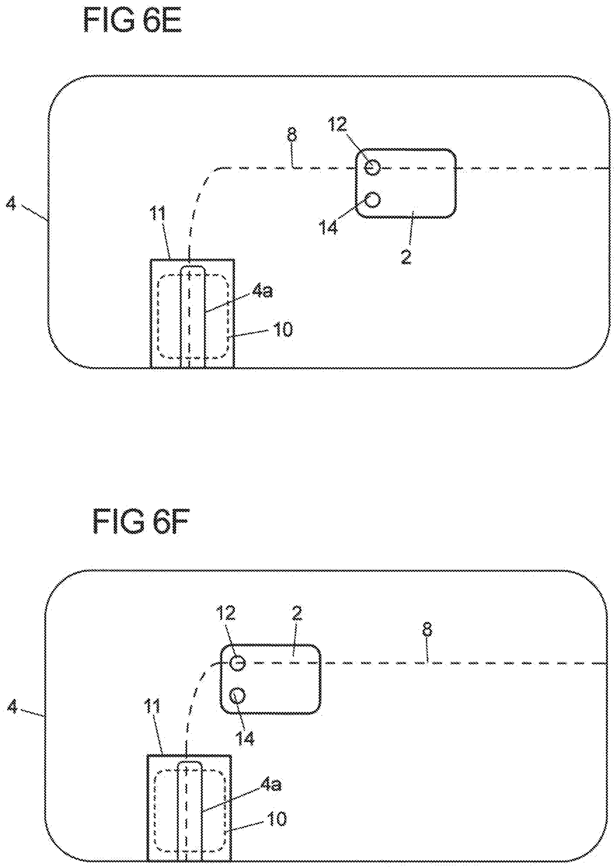

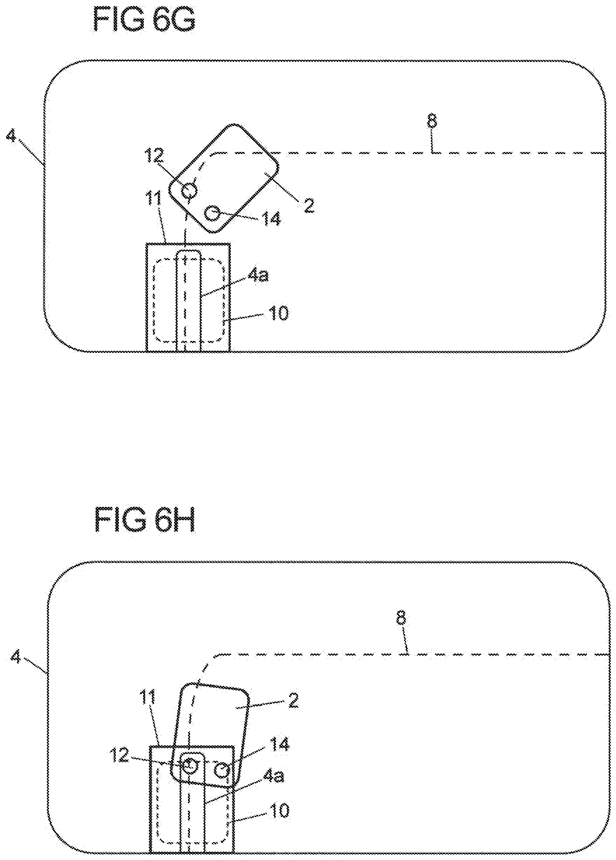

Figs. 6E, 6F and 6G show the robotic mower 2 after straddling along the guide wire 8 portions of its way to the charging station 11.

Next, the robotic mower 2 detects that one or both of the sensors 12, 14 has/have entered the charging station loop 10 by detecting a change of the measured charging station loop 10 signal polarity, see Fig. 6H.

In response to detecting entering of the charging station loop 10, the robotic mower 2 continues to drive straight forward for a predetermined distance.

Next, the robotic mower 2 localizes itself in relation to the near-field loop (boundary wire loop 4a). The boundary wire loop 4a is a fixed part of the boundary wire 4 and contains the same signal as the boundary wire 4. In order to determine its orientation in relation to the boundary wire loop 4a, the robotic mower 2 turns until one of the front sensors 12, 14 enters the boundary wire loop 4a. When one of the front sensors 12, 14 enters the boundary wire loop 4a or is already inside the boundary wire loop 4a, the robotic mower 2 continues to turn until the trailing sensor 12, 14 (if one sensor 12, 14 enters the boundary wire loop 4a first, the trailing sensor is the other one of the sensors 12, 14) also enters the boundary wire loop 4a.

The near-field alignment which the robotic mower 2 is configured to perform may also include fault handling to detect if the robotic mower 2 is initially turning in the wrong direction, by, for example, using a maximum turning angle without detecting the boundary wire loop 4a with any of the front sensors 12, 14 before turbine in the other direction. This fault detection is only used if no loop signal would be inside the boundary wire loop 4a before the initial turning. If a sensor 12, 14 is inside of the boundary wire loop 4a, the robotic mower 2 can deduce which direction to turn.

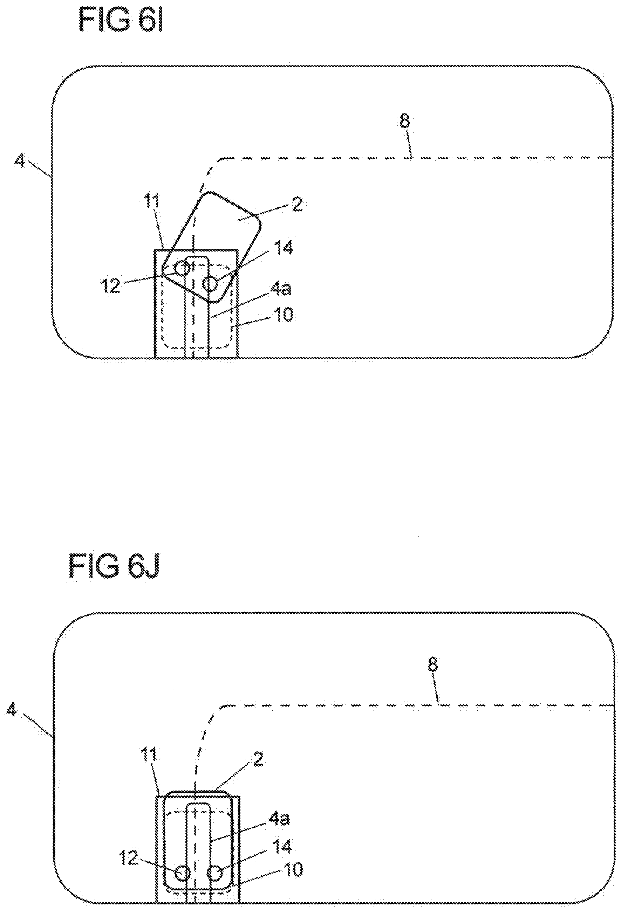

Fig. 6I shows the robotic mower 2 after having initially aligned with the boundary wire loop 4a. Next, the robotic mower 2 continues with the docking procedure. The robotic mower 2 drives (slowly) forward and depending on the sensor 12, 14 information about the boundary wire loop 4a signal (in general, near-field signal) either turns slightly left or right. Optionally, the following procedure is used: (a) if the left sensor 14 is inside the boundary wire loop 4a and the right sensor 12 is outside of the boundary wire loop 4a, the robotic mower 2 turns left, e.g., using a turning velocity (and/or time) that depends on the boundary wire loop 4a signal level measured by the left sensor 14; (b) if the right sensor 12 is inside the boundary wire loop 4a and the left sensor 12 is outside of the boundary wire loop 4a, the robotic mower 2 turns right e.g., using a turning velocity (and/or time) that depends on the boundary wire loop 4a signal level measured by the right sensor 12; (c) if no sensor 12, 14 is inside the boundary wire loop 4a, or both sensors 12, 14 are inside the boundary wire loop 4a, then the robotic mower 2 drives straight forward without turning. Steps (a) to (c) may be performed continuously until the robotic mower 2 reaches the charging position where the charging connectors 16 of the robotic mower 2 make electric contact with the charging connectors 26 of the charging station 11.

Fig. 6J shows the robotic mower 2 in the charging position.

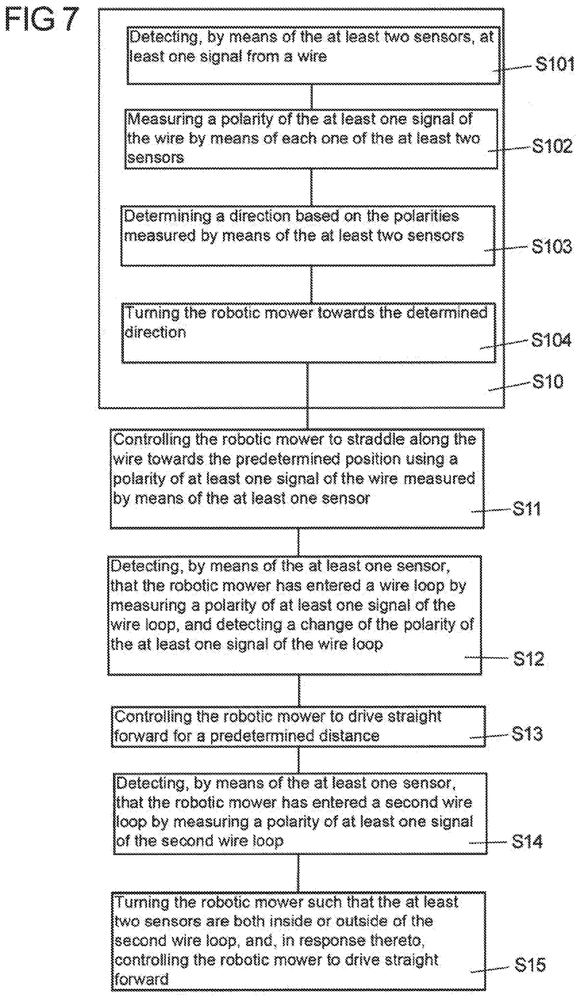

Turning now to Fig. 7, an exemplary method will now be described. The method starts, e.g., when the robotic mower 2 processes, e.g. receives, a return signal at or from the control unit 22, which commands the robotic mower 2 to return to the charging station 11. This may be triggered by detecting that the power in the battery 18 is lower than a predetermined limit. The predetermined limit is set such that the robotic mower 2 may safely return to the charging station 11 before the battery 18 is empty, even if it happens to be the longest possible way back to the charging station 11.

When the robotic mower 2 has processed the command to return to the charging station 11, it commences with Step S10.

At step S10, the robotic mower 2 navigates, by means of at least two sensors 12, 14 detecting at least one signal of a wire 8, such that the at least one sensor 12, 14 is located above the wire 8. Step S10 comprises the following steps S101 to S104.

At step S101, the control unit 22 detects, using the at least two sensors 12, 14, at least one signal from the wire 8, e.g., guide wire 8. Thus, the control unit 22 determines that the wire or guide wire 8 is close.

Next, at step S102, the control unit 22 measures a polarity of the at least one signal of the wire 8 by means of each one of the at least two sensors 12, 14.

At step S103, the control unit 22 determines a direction based on the polarities measured by means of the at least two sensors 12, 14. For example, the direction may be one among left, right, forward, backward.

Next, at step S104 the control unit 22 controls the robotic mower 2 to turn towards the determined direction (or keep the direction if the determined direction as already assumed). Optionally, the method terminates after step S104, or continues otherwise, e.g., with step S11.

At step S11, the control unit 22 controls the robotic mower 2 to drive along the wire 8 towards the predetermined position using a polarity of at least one signal of the wire 8 measured by means of at least one sensor 12, 14.

Next, at step S12, the control system 22 detects, by means of the at least one sensor 12, 14, that the robotic mower 2 has entered a wire loop 10 by measuring a polarity of at least one signal of the wire loop 10 and detecting a change of the polarity of the at least one signal of the wire loop 10.

At subsequent, optional step S13, the control system 22 controls the robotic mower 2 to drive straight forward for a predetermined distance.

The wire loop 10 is a first wire loop 10. At step S14 and in response to detecting that the robotic mower 2 has entered the first wire loop 10, the control system 22 detects, by means of the at least one sensor 12, 14, that the robotic mower 2 has entered a second wire loop 4a by measuring a polarity of at least one signal of the second wire loop 4a.

In response to detecting that the robotic mower 2 has entered the second wire loop 4a, at step S15, the control system 22 controls the robotic mower 2 to turn such that the at least two sensors 12, 14 are both inside or outside of the second wire loop 4a, and optionally, in response thereto, controls the robotic mower 2 to drive straight forward. This process may be repeated until the robotic mower 2 assumes the charging position.

Although, the present invention has been described above with reference to specific embodiments, it is not intended to be limited to the specific form set forth herein. Rather, the invention is limited only by the accompanying claims.

In the claims, the term "comprises/comprising" does not exclude the presence of other elements or steps. Furthermore, although individually listed, a plurality of means or elements may be implemented by e.g. a single unit or processor. Additionally, although individual features may be included in different claims, these may possibly advantageously be combined, and the inclusion in different claims does not imply that a combination of features is not feasible and/or advantageous. In addition, singular references do not exclude a plurality. The terms "a", "an", "first", "second" etc. do not preclude a plurality. Reference signs in the claims are provided merely as a clarifying example and shall not be construed as limiting the scope of the claims in any way.

### List of reference numerals

- 2: robotic mower
- 4: boundary wire
- 4a: boundary wire loop (second wire loop)
- 6: signal generator
- 8: guide wire
- 10: charging station loop (first wire loop)
- 11: charging station
- 12, 12': sensor
- 14, 14': sensor
- 16: charging connector
- 18: battery
- 20: wheel
- 22: control unit
- 24: charging station plate
- 26: charging connector
- 60: processor
- 62: memory
- 64: computer program
- 80: processor
- 82: memory
- 84: computer program
- A: area

## Claims

1. A method for navigating a robotic mower (2) by means of a wire (4a; 8; 10), said robotic mower (2) comprising at least two sensors (12; 14), the method comprising:
- detecting (S101), by means of the at least two sensors (12, 14), at least one signal from the wire (4a; 8; 10),
- measuring (S102) a polarity of the at least one signal of the wire (4a; 8; 10) by means of each one of the at least two sensors (12, 14),
- determining (S103) a direction based on the polarities measured by means of the at least two sensors (12, 14) and
- turning (S104) the robotic mower (2) towards the determined direction, **characterized in that** the robotic mower (2) is driven further across the wire (8; 10) by a predetermined crossing distance before measuring the polarity of the at least one signal of the wire (8; 10) by means of each one of the at least two sensors (12, 14).

2. The method according to Claim 1, wherein turning (S104) the robotic mower (2) towards the determined direction comprises rotating the robotic mower (2) with respect to the wire (8) such that one of the at least two sensors (12, 14) is located above the wire (8).

3. The method according to Claim 1 or 2, wherein turning (S104) the robotic mower (2) towards the determined direction comprises rotating the robotic mower (2) with respect to the wire (4a; 8; 10) until one of the at least two sensors (12, 14) detects a change of the polarity of the at least one signal of the wire (4a; 8; 10).

4. The method according to any of Claims 1 to 3, wherein turning (S104) the robotic mower (2) towards the determined direction comprises rotating the robotic mower (2) with respect to the wire (4a; 8; 10) until the at least two sensors (12, 14) detect the at least one signal of the wire (4a; 8; 10) with opposite polarity.

5. The method according to any of Claims 1 to 4, wherein the wire (8) is a guide wire (8) arranged within an area (A) delimited by a boundary wire (4).

6. The method according to any of Claims 1 to 4, wherein the wire (4a; 10) is a wire loop arranged at a charging station plate (24) of a charging station (11).

7. The method according to any one of the preceding claims, further comprising:
- navigating (S10) the robotic mower (2), by means of one of the at least two sensors (12, 14) detecting at least one signal of the wire (8), such that one of the at least two sensors (12, 14) is located above the wire (8), and
- controlling (S11) the robotic mower (2) to straddle along the wire (8) towards a predetermined position using a polarity of at least one signal of the wire (8) measured by means of one of the at least two sensors (12, 14).

8. The method according to Claim 7, further comprising detecting (S12), by means of one of the at least two sensors (12, 14), that the robotic mower (2) has entered a wire loop (10) by measuring a polarity of at least one signal of the wire loop (10) and detecting a change of the polarity of the at least one signal of the wire loop (10).

9. The method according to Claim 8, further comprising, in response to detecting that the robotic mower (2) has entered the wire loop (10), controlling (S13) the robotic mower (2) to drive straight forward for a predetermined distance.

10. The method according to Claim 8 or 9, wherein the wire loop (10) is a first wire loop (10), the method further comprising, in response to detecting that the robotic mower (2) has entered the first wire loop (10), detecting (S14), by means of one of the at least two sensors (12, 14), that the robotic mower (2) has entered a second wire loop (4a) by measuring a polarity of at least one signal of the second wire loop (4a).

11. The method according to Claim 10, further comprising, in response to detecting that the robotic mower (2) has entered the second wire loop (4a), turning (S15) the robotic mower (2) such that the at least two sensors (12, 14) are both inside or both outside of the second wire loop (4a), and, in response thereto, controlling the robotic mower (2) to drive straight forward.

12. A robotic mower (2) comprising at least two sensors (12; 14) and a control unit (22) comprising a processor (80) and a memory (82), said memory (82) comprising instructions which when executed by the processor (80) causes the mower to perform the method according to any one of claims 1 to 11.

## Patentansprüche

1. Verfahren zum Navigieren eines robotischen Mähers (2) mittels eines Drahts (4a; 8; 10), wobei der robotische Mäher (2) mindestens zwei Sensoren (12; 14) umfasst, wobei das Verfahren Folgendes umfasst:
- Erfassen (S101) mittels der mindestens zwei Sensoren (12, 14) mindestens eines Signals aus dem Draht (4a; 8; 10),
- Messen (S102) einer Polarität des mindestens einen Signals des Drahts (4a; 8; 10) mittels jedes der mindestens zwei Sensoren (12, 14),
- Bestimmen (S103) einer Richtung auf der Grundlage der mittels der mindestens zwei Sensoren (12, 14) gemessenen Polaritäten und
- Drehen (S104) des robotischen Mähers (2) in die bestimmte Richtung,
**dadurch gekennzeichnet, dass** der robotische Mäher (2) um eine vorbestimmte Überquerungsstrecke weiter über den Draht (8; 10) gefahren wird, bevor die Polarität des mindestens einen Signals des Drahts (8; 10) mittels jedes der mindestens zwei Sensoren (12, 14) gemessen wird.

2. Verfahren nach Anspruch 1, wobei das Drehen (S104) des robotischen Mähers (2) in die bestimmte Richtung das Drehen des robotischen Mähers (2) relativ zum Draht (8) umfasst, sodass sich einer der mindestens zwei Sensoren (12, 14) über dem Draht (8) befindet.

3. Verfahren nach Anspruch 1 oder 2, wobei das Drehen (S104) des robotischen Mähers (2) in die bestimmte Richtung das Drehen des robotischen Mähers (2) relativ zum Draht (4a; 8; 10) umfasst, bis einer der mindestens zwei Sensoren (12, 14) eine Änderung der Polarität des mindestens einen Signals des Drahts (4a; 8; 10) erfasst.

4. Verfahren nach einem der Ansprüche 1 bis 3, wobei das Drehen (S104) des robotischen Mähers (2) in die bestimmte Richtung das Drehen des robotischen Mähers (2) relativ zum Draht (4a; 8; 10) umfasst, bis die mindestens zwei Sensoren (12, 14) das mindestens eine Signal des Drahts (4a; 8; 10) mit entgegengesetzter Polarität erfassen.

5. Verfahren nach einem der Ansprüche 1 bis 4, wobei der Draht (8) ein Führungsdraht (8) ist, der innerhalb eines durch einen Begrenzungsdraht (4) abgegrenzten Bereichs (A) angeordnet ist.

6. Verfahren nach einem der Ansprüche 1 bis 4, wobei der Draht (4a; 10) eine Drahtschlaufe ist, die an einer Ladestationsplatte (24) einer Ladestation (11) angeordnet ist.

7. Verfahren nach einem der vorstehenden Ansprüche, weiter umfassend:
- Navigieren (S10) des robotischen Mähers (2) mittels eines der mindestens zwei Sensoren (12, 14), der mindestens ein Signal des Drahtes (8) erfasst, wobei sich einer der mindestens zwei Sensoren (12, 14) über dem Draht (8) befindet, und
- Steuern (S11) des robotischen Mähers (2), damit dieser entlang des Drahtes (8) in Richtung einer vorbestimmten Position fährt, unter Verwendung der Polarität von mindestens einem Signal des Drahtes (8), das mittels eines der mindestens zwei Sensoren (12, 14) gemessen wird.

8. Verfahren nach Anspruch 7, weiter umfassend das Erfassen (S12), mittels eines der mindestens zwei Sensoren (12, 14), dass der robotische Mäher (2) in eine Drahtschleife (10) eingetreten ist, indem eine Polarität von mindestens einem Signal der Drahtschleife (10) gemessen und eine Änderung der Polarität des mindestens einen Signals der Drahtschleife (10) erfasst wird.

9. Verfahren nach Anspruch 8, weiter umfassend, als Reaktion auf das Erfassen, dass der robotische Mäher (2) in die Drahtschleife (10) eingetreten ist, das Steuern (S13) des robotischen Mähers (2), damit dieser eine vorbestimmte Strecke geradeaus fährt.

10. Verfahren nach Anspruch 8 oder 9, wobei die Drahtschleife (10) eine erste Drahtschleife (10) ist, wobei das Verfahren weiter umfasst, als Reaktion auf das Erfassen, dass der robotische Mäher (2) in die erste Drahtschleife (10) eingetreten ist, das Erfassen (S14) mittels eines der mindestens zwei Sensoren (12, 14), dass der robotische Mäher (2) in eine zweite Drahtschleife (4a) eingetreten ist, indem eine Polarität von mindestens einem Signal der zweiten Drahtschleife (4a) gemessen wird.

11. Verfahren nach Anspruch 10, weiter umfassend, als Reaktion auf das Erfassen, dass der robotische Mäher (2) in die zweite Drahtschleife (4a) eingetreten ist, das Drehen (S15) des robotischen Mähers (2), sodass sich die mindestens zwei Sensoren (12, 14) entweder beide innerhalb oder beide außerhalb der zweiten Drahtschleife (4a) befinden, und als Reaktion darauf das Steuern des robotischen Mähers (2), damit er geradeaus fährt.

12. Robotischer Mäher (2), umfassend mindestens zwei Sensoren (12; 14) und eine Steuerungseinheit (22), umfassend einen Prozessor (80) und einen Speicher (82), wobei der Speicher (82) Anweisungen umfasst, die, wenn sie vom Prozessor (80) ausgeführt werden, den Mäher dazu veranlassen, das Verfahren nach einem der Ansprüche 1 bis 11 auszuführen.

## Revendications

1. Procédé pour la navigation d'un robot tondeuse (2) au moyen d'un fil (4a ; 8 ; 10), ledit robot tondeuse (2) comprenant au moins deux capteurs (12 ; 14), le procédé comprenant :
- la détection (S101), au moyen des au moins deux capteurs (12, 14), d'au moins un signal provenant du fil (4a ; 8 ; 10),
- la mesure (S102) d'une polarité de l'au moins un signal du fil (4a ; 8 ; 10) au moyen de chacun des au moins deux capteurs (12, 14),
- la détermination (S103) d'une direction sur la base des polarités mesurées au moyen des au moins deux capteurs (12, 14) et
- le fait de faire tourner (S104) le robot tondeuse (2) vers la direction déterminée, **caractérisé en ce que** le robot tondeuse (2) est entraîné par-dessus le fil (8 ; 10) sur une distance de franchissement prédéterminée, avant de mesurer la polarité de l'au moins un signal du fil (8 ; 10) au moyen de chacun des au moins deux capteurs (12, 14).

2. Procédé selon la revendication 1, dans lequel le fait de faire tourner (S104) le robot tondeuse (2) vers la direction déterminée comprend le fait de faire pivoter le robot tondeuse (2) par rapport au fil (8) de telle sorte que l'un des au moins deux capteurs (12, 14) soit situé au-dessus du fil (8).

3. Procédé selon la revendication 1 ou la revendication 2, dans lequel le fait de faire tourner (S104) le robot tondeuse (2) vers la direction déterminée comprend le fait de faire pivoter le robot tondeuse (2) par rapport au fil (4a ; 8 ; 10) jusqu'à ce que l'un des au moins deux capteurs (12, 14) détecte un changement de la polarité de l'au moins un signal du fil (4a ; 8 ; 10).

4. Procédé selon l'une quelconque des revendications 1 à 3, dans lequel le fait de faire tourner (S104) le robot tondeuse (2) vers la direction déterminée comprend le fait de faire pivoter le robot tondeuse (2) par rapport au fil (4a ; 8 ; 10) jusqu'à ce que les au moins deux capteurs (12, 14) détectent l'au moins un signal du fil (4a ; 8 ; 10) avec une polarité opposée.

5. Procédé selon l'une quelconque des revendications 1 à 4, dans lequel le fil (8) est un fil-guide (8) disposé à l'intérieur d'une zone (A) délimitée par un fil périphérique (4).

6. Procédé selon l'une quelconque des revendications 1 à 4, dans lequel le fil (4a ; 10) est une boucle de fil disposée au niveau d'une plaque (24) de station de charge d'une station de charge (11).

7. Procédé selon l'une quelconque des revendications précédentes, comprenant en outre :
- le fait d'assurer la navigation (S10) du robot tondeuse (2), au moyen de l'un des au moins deux capteurs (12, 14) détectant au moins un signal du fil (8), de telle sorte que l'un des au moins deux capteurs (12, 14) soit situé au-dessus du fil (8), et
- la commande (S11) du robot tondeuse (2) pour avancer à cheval sur le fil (8) vers une position prédéterminée en utilisant une polarité d'au moins un signal du fil (8) mesurée au moyen de l'un des au moins deux capteurs (12, 14).

8. Procédé selon la revendication 7, comprenant en outre le fait de détecter (S12), au moyen de l'un des au moins deux capteurs (12, 14), que le robot tondeuse (2) est entré dans une boucle de fil (10) en mesurant une polarité d'au moins un signal de la boucle de fil (10) et en détectant un changement de la polarité de l'au moins un signal de la boucle de fil (10).

9. Procédé selon la revendication 8, comprenant en outre, en réponse à la détection du fait que le robot tondeuse (2) est entré dans la boucle de fil (10), le fait de commander (S13) le robot tondeuse (2) pour avancer tout droit vers l'avant sur une distance prédéterminée.

10. Procédé selon la revendication 8 ou la revendication 9, dans lequel la boucle de fil (10) est une première boucle de fil (10), le procédé comprenant en outre, en réponse à la détection du fait que le robot tondeuse (2) est entré dans la première boucle de fil (10), le fait de détecter (S14), au moyen de l'un des au moins deux capteurs (12, 14), que le robot tondeuse (2) est entré dans une deuxième boucle de fil (4a) en mesurant une polarité d'au moins un signal de la deuxième boucle de fil (4a).

11. Procédé selon la revendication 10, comprenant en outre, en réponse à la détection du fait que le robot tondeuse (2) est entré dans la deuxième boucle de fil (4a), le fait de faire tourner (S15) le robot tondeuse (2) de telle sorte que les au moins deux capteurs (12, 14) sont tous les deux à l'intérieur ou tous les deux à l'extérieur de la deuxième boucle de fil (4a), et, en réponse à cela, le fait de commander le robot tondeuse (2) pour avancer tout droit vers l'avant.

12. Robot tondeuse (2) comprenant au moins deux capteurs (12 ; 14) et une unité de commande (22) comprenant un processeur (80) et une mémoire (82), ladite mémoire (82) comprenant des instructions qui, lorsqu'elles sont exécutées par le processeur (80), amènent la tondeuse à exécuter le procédé selon l'une quelconque des revendications 1 à 11.
